# EUROPEAN PATENT SPECIFICATION

(11) **EP 4 596 329 B1**
(45) Date of publication and mention of the grant of the patent: **01.07.2026**
(21) Application number: 24220097.0
(22) Date of filing: 16.12.2024
(51) Int. Cl.: B60R 16/02, B60R 16/03, H04B 3/54, B60R 16/023

(54) **VEHICLE CIRCUIT STRUCTURE**
FAHRZEUGSCHALTKREIS
STRUCTURE DE CIRCUIT DE VÉHICULE

(30) Priority: 31.01.2024 JP 2024012978
(43) Date of publication of application: 06.08.2025
(73) Proprietor: Yazaki Corporation, Tokyo 108-0075 (JP)
(72) Inventor: Suzuki, Yasuhito, Shizuoka, 421-0407 (JP); Nogaki, Takao, Shizuoka, 421-0407 (JP)
(74) Representative: Hoffmann Eitle

(56) References cited:
- EP-A1- 3 476 661
- KR-A- 20200 071 702
- US-A1- 2016 059 807
- US-A1- 2019 173 240
- US-A1- 2019 344 731
- US-A1- 2022 400 558

## Description

### TECHNICAL FIELD

The present invention relates to a vehicle circuit structure.

### BACKGROUND ART

In the related art, a circuit structure for connecting a power supply or the like mounted on a vehicle to various electric components and the like is known. This type of circuit structure is generally implemented by a so-called wire harness or the like, and is configured to enable appropriate supply of electric power to a large number of electric components (for example, an ECU and various auxiliary devices) from a power supply such as a battery and an alternator (electric generator), appropriate switching between supply and cut-off of the electric power, and transmission of various communication signals.

More specifically, this type of circuit structure generally includes an electric wire bundle that is an aggregate of various electric wires connecting a power supply to an electric component, a junction block that distributes electric power to a plurality of systems, a relay box that controls supply or cut-off of the electric power for each system, and an electric junction box such as a fuse box that protects the electric wires and the electric component from an excessive current or the like (see, for example, Patent Literature 1).

### CITATION LIST

### PATENT LITERATURE

Patent Literature 1: JP2005-078962A
US 2022/400558 A1 relates to a control device and manufacturing method of a control device. The control device includes a standard substrate on which a first input/output circuit and a control circuit configured to control the first input/output circuit are mounted, and a power supply substrate on which a connection portion and a power supply circuit are mounted. The first input/output circuit is at least one of an input circuit or an output circuit for a standard electrical equipment. The connection portion is configured to be connected to a power supply line for supplying electric power.
US 2016/059807 A1 relates to a vehicular power control system, a wire harness, and a vehicular power control device. A vehicular power control system for supplying electric power from a power source of a vehicle to respective ones of a plurality of loads or electronic control units is provided. The vehicular power control system includes a power distribution unit, a customized information storing unit and a power control unit. Further prior art can be found in US 2019/173240 A1, EP 3476661 A1, US 2019/344731 A1, KR 20200071702 A.

### SUMMARY OF INVENTION

In order to produce a vehicle circuit structure by assembling the above-described electric wire bundle, electric junction box, and the like, various attempts have been made to improve productivity in the related art. However, due to the complexity of the circuit structure, it is difficult to completely automate the production using a machine. Generally, part or most of a production process requires assembly work by manual work of a worker. Further, in recent years, as the number of electric components mounted on a vehicle increases and the control becomes complicated, the circuit structure tends to be more complicated. Further, as the types of vehicle models and the types of optional electric components increase, the types of circuit structures to be produced also tend to increase. For this reason, in general, it is difficult to drastically reduce production costs and production time of the vehicle circuit structure, and it is also difficult to produce a vehicle circuit structure in a flexible and rapid response to specification changes of the vehicle or the like.

An object of the present invention is to provide a vehicle circuit structure in which a structure is simplified while a required function as the vehicle circuit structure is maintained.

In order to achieve the object described above, the vehicle circuit structure according to the present invention has the features of claim 1. Advantageous embodiments are described in the dependent claims.

A vehicle circuit structure supplies electric power to a plurality of electric components mounted on a vehicle and transmits a communication signal to the plurality of electric components. The vehicle circuit structure includes a first control unit that is connected to a power supply; a plurality of second control units that is connected to the first control unit; a plurality of first wires that connect the first control unit to the plurality of second control units in a one-to-one manner without branching; and a plurality of second wires that connect each of the plurality of second control units to the electric component to be controlled. The first control unit includes a first processing device that controls supply of electric power to each of the plurality of second control units and transmission of a communication signal to each of the plurality of second control units, and each of the plurality of first wires includes a power supply line that transmits electric power, a ground line that indicates a reference potential, and a signal line that transmits a communication signal.

According to the vehicle circuit structure of the present invention, the first control unit (for example, a power supply signal hub to be described later) connected to the power supply (for example, a battery or the like) and the plurality of second control units (for example, region control devices to be described later) to be connected to the first control unit are connected to each other in a one-to-one manner via the plurality of first wires without branching. Further, the plurality of first wires have a common structure in that each of the first wires includes the power supply line transmitting the electric power, the ground line indicating the reference potential, and the signal line transmitting the communication signal. In this way, since the first wire has no branch and has the common structure, it is easy to automate the production of the first wire by a machine, assembly work by manual work of a worker can be reduced or eliminated, and excessively thick or long electric wires that are intended to branch are eliminated from the first wire. Further, the second control unit and the electric component to be controlled are connected by the second wire. Accordingly, the circuit structure of the present invention can simplify an overall structure while maintaining the required function as the vehicle circuit structure. As a result, the circuit structure can be produced in a short delivery time and at low costs as compared with a circuit structure in the related art. When the electric component is added or changed in response to specification changes of a vehicle, the circuit structure can also be easily changed or reconfigured. In addition, the circuit structure of the present invention can contribute to reduction in weight of the vehicle and reduction in the amount of carbon dioxide emissions in the production process of the circuit structure.

The present invention is briefly described above. Further, details of the present invention will be further clarified by reading modes for carrying out the invention described below with reference to the accompanying drawings.

### BRIEF DESCRIPTION OF DRAWINGS

FIG. 1 is a schematic configuration diagram showing a state in which a vehicle circuit structure according to an embodiment of the present invention is mounted (routed) on a vehicle body.
FIG. 2 is a perspective view showing a power supply signal hub shown in FIG. 1 and main wires connected to the power supply signal hub.
FIG. 3 is a circuit conceptual diagram of the power supply signal hub shown in FIG. 2.
FIG. 4A is a cross-sectional view of an electric wire portion of the main wire shown in FIG. 2, and FIG. 4B is a cross-sectional view showing another structural example of the electric wire portion of the main wire.
FIG. 5 is a front view of a connector portion of the main wire shown in FIG. 2.
FIG. 6 is a perspective view showing a region control device shown in FIG. 1 and the main wire and sub-wires connected to the region control device.
FIG. 7 is a circuit conceptual diagram of the region control device shown in FIG. 6.
FIG. 8 is a perspective view showing an example of a case where a door switch disposed in a door region is replaced with a touch panel.

### DESCRIPTION OF EMBODIMENTS

### <Embodiment>

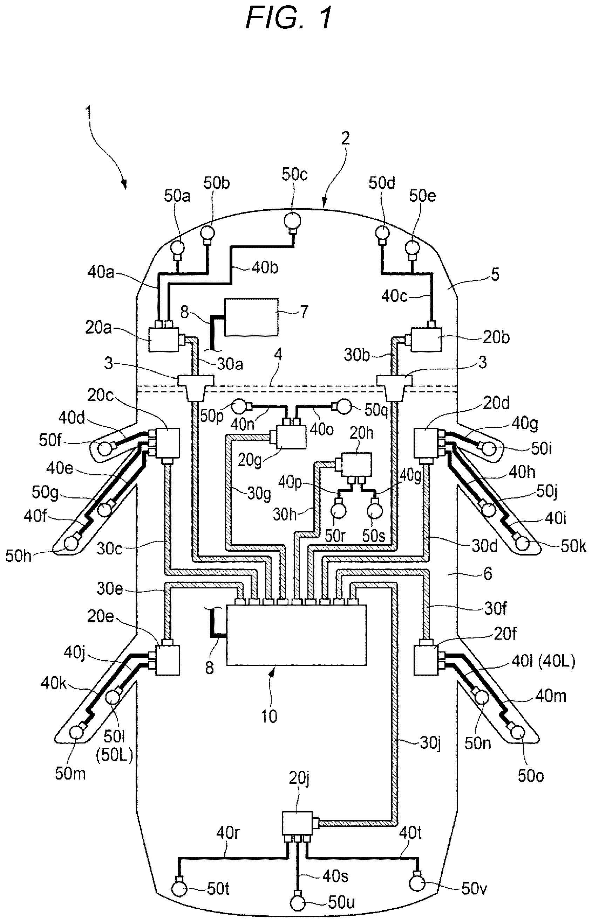

Hereinafter, a vehicle circuit structure 1 according to an embodiment of the present invention will be described with reference to FIGS. 1 to 3, 4A, 4B, and 5 to 8.

As shown in FIG. 1, the circuit structure 1 according to the embodiment of the present invention is mounted on a vehicle body 2 on which various electric components 50a to 50v are mounted and used. The circuit structure 1 includes a power supply signal hub 10, a plurality of region control devices 20a to 20i, a plurality of main wires 30a to 30i that connect the power supply signal hub 10 to the plurality of region control devices 20a to 20i, respectively, in a one-to-one manner without branching, and a plurality of sub-wires 40a to 40t that connect the plurality of region control devices 20a to 20i to electric components to be controlled 50a to 50v, respectively. First, the arrangement of the power supply signal hub 10 and the plurality of region control devices 20 will be described. Hereinafter, the electric components 50a to 50v may be collectively referred to as electric components 50, the region control devices 20a to 20i may be collectively referred to as region control devices 20, the main wires 30a to 30i may be collectively referred to as main wires 30, the electric components 50a to 50v may be collectively referred to as electric components 50, and the sub-wires 40a to 40t may be collectively referred to as sub-wires 40.

As shown in FIG. 1, the power supply signal hub 10 is disposed in a central portion of the vehicle body 2. In this example, as shown in FIGS. 1 to 3, the power supply signal hub 10 is connected to a power supply 7 (for example, a 12 V battery) disposed in a front region of the vehicle body 2 via a power supply line 8, and electric power is supplied from the power supply 7. The arrangement of the power supply 7 to which the power supply signal hub 10 is connected is not limited to the front region of the vehicle body 2. For example, the power supply 7 may be disposed in an underfloor region of the central portion of the vehicle body 2, a rear region of the vehicle body 2, and the like. In other words, the power supply 7 may be disposed around a high-voltage power supply for driving (for example, in a so-called power supply room) mounted on a hybrid automobile or an electric automobile.

As shown in FIG. 1, the plurality of region control devices 20 (20a to 20i) are disposed in a plurality of regions of the vehicle body 2, respectively, and are connected to the power supply signal hub 10 via the corresponding main wires 30 (30a to 30i) in a one-to-one manner without branching.

Specifically, the region control device 20a is disposed in a front left region of the vehicle body 2 and connected one-to-one to the power supply signal hub 10 via the main wire 30a without branching. The region control device 20b is disposed in a front right region of the vehicle body 2 and connected one-to-one to the power supply signal hub 10 via the main wire 30b without branching. The region control device 20c is disposed in a front-left door region of the vehicle body 2 and connected one-to-one to the power supply signal hub 10 via the main wire 30c without branching. The region control device 20d is disposed in a front-right door region of the vehicle body 2 and connected one-to-one to the power supply signal hub 10 via the main wire 30d without branching. The region control device 20e is disposed in a rear-left door region of the vehicle body 2 and connected one-to-one to the power supply signal hub 10 via the main wire 30e without branching. The region control device 20f is disposed in a rear-right door region of the vehicle body 2 and connected one-to-one to the power supply signal hub 10 via the main wire 30f without branching. The region control device 20g is disposed in an instrument panel region of the vehicle body 2 and connected one-to-one to the power supply signal hub 10 via the main wire 30g without branching. The region control device 20h is disposed in a steering region of the vehicle body 2 and connected one-to-one to the power supply signal hub 10 via the main wire 30h without branching. The region control device 20i is disposed in a rear region of the vehicle body 2 and connected one-to-one to the power supply signal hub 10 via the main wire 30i without branching.

Each of the main wires 30a and 30b is inserted into a through hole provided in a dash panel 4 of the vehicle body 2. Specifically, a grommet 3 (exterior member) through which each of the main wires 30a and 30b is inserted is fixed to the through hole, so that an engine room 5 and a vehicle interior 6 sandwiching the dash panel 4 are partitioned in a liquid-tight manner.

Each of the plurality of region control devices 20 (20a to 20i) is connected to the electric components 50 disposed in each region where each of the region control devices 20 itself is disposed via the corresponding sub-wire 40 (40a to 40t).

Specifically, the region control device 20a disposed in the front left region of the vehicle body 2 is connected to the left-direction instruction lamp 50a and the left headlamp 50b disposed in the front left region of the vehicle body 2 via the sub-wire 40a having a branch point, and is connected one-to-one to the front camera 50c disposed in a front center region of the vehicle body 2 via the sub-wire 40b without branching. The region control device 20b disposed in the front right region of the vehicle body 2 is connected to the right headlamp 50d and the right direction indicator lamp 50e disposed in the front right region of the vehicle body 2 via the sub-wire 40c having a branch point.

Further, the region control device 20c disposed in the front-left door region of the vehicle body 2 is connected one-to-one to the left electric door mirror 50f disposed in the front-left door region of the vehicle body 2 via the sub-wire 40d without branching, is connected one-to-one to the door switch 50g disposed in the front-left door region of the vehicle body 2 via the sub-wire 40e without branching, and is connected one-to-one to the courtesy switch 50h disposed in the front-left door region of the vehicle body 2 via the sub-wire 40f without branching. The region control device 20d disposed in the front-left door region of the vehicle body 2 is connected one-to-one to the right electric door mirror 50i disposed in the front-right door region of the vehicle body 2 via the sub-wire 40g without branching, is connected one-to-one to the door switch 50j disposed in the front-right door region of the vehicle body 2 via the sub-wire 40h without branching, and is connected one-to-one to the courtesy switch 50k disposed in the front-right door region of the vehicle body 2 via the sub-wire 40i without branching.

Further, the region control device 20e disposed in the rear-left door region of the vehicle body 2 is connected one-to-one to the door switch 501 ("1" being a lowercase L, hereinafter, sometimes referred to as "50L") disposed in the rear-left door region of the vehicle body 2 via the sub-wire 40j without branching, and is connected one-to-one to the courtesy switch 50m disposed in the rear-left door region of the vehicle body 2 via the sub-wire 40k without branching. The region control device 20f disposed in the rear-right door region of the vehicle body 2 is connected one-to-one to the door switch 50n disposed in the rear-right door region of the vehicle body 2 via the sub-wire 401 ("1" being a lowercase L, hereinafter, sometimes referred to as "40L") without branching, and is connected one-to-one to the courtesy switch 50o disposed in the rear-right door region of the vehicle body 2 via the sub-wire 40m without branching.

Further, the region control device 20g disposed in the instrument panel region of the vehicle body 2 is connected one-to-one to the air conditioner electric component 50p disposed in the instrument panel region of the vehicle body 2 via the sub-wire 40n without branching, and is connected one-to-one to the meter panel electric component 50q disposed in the instrument panel region of the vehicle body 2 via the sub-wire 40o without branching. The region control device 20h disposed in the steering region of the vehicle body 2 is connected one-to-one to the steering electric component 50r disposed in the steering region of the vehicle body 2 via the sub-wire 40p without branching, and is connected one-to-one to the horn switch 50s disposed in the steering region of the vehicle body 2 via the sub-wire 40q without branching.

Further, the region control device 20i disposed in the rear region of the vehicle body 2 is connected one-to-one to the left direction indicator lamp 50t disposed in the rear region of the vehicle body 2 via the sub-wire 40r without branching, is connected one-to-one to the rear camera 50u disposed in the rear region of the vehicle body 2 via the sub-wire 40s without branching, and is connected one-to-one to the right direction indicator lamp 50v disposed in the rear region of the vehicle body 2 via the sub-wire 40t without branching.

Thus, one region control devices 20 (one of 20a to 20i) and another region control device 20 (another of 20a to 20i) are not connected to each other without using the power supply signal hub 10. In other words, there is no electric wire across different regions of the vehicle body 2. In this way, the product numbers of sub-wires 40 can be reduced by deleting the electric wire across different regions of the vehicle body 2.

As described above, in the circuit structure 1, the power supply signal hub 10 is disposed in the central portion of the vehicle body 2, the main wire 30 is routed from the power supply signal hub 10 toward the region control device 20 in each region of the vehicle body 2, and the sub-wire 40 is routed from the region control device 20 toward each electric component 50 in each region. In the circuit structure 1, since the structure of the main wire 30 is simplified and there is no electric wire crossing across the regions, a space required for disposing the circuit structure 1 can be reduced, and the degree of freedom in designing a vehicle interior space can be improved. Further, the number of members (so-called protectors) for protecting the main wire 30 and the sub-wire 40 can also be reduced. Further, the region control device 20 and the electric component 50 are connected by the sub-wire 40. Accordingly, when the electric component 50 is added or changed in response to specification changes of the vehicle or the like, since only the sub-wire 40 may be added or changed without changing the main wire 30, the circuit structure 1 can be changed within a delivery time and at low costs.

Further, the region control devices 20c, 20d, 20e, and 20f disposed in the respective door regions of the vehicle body 2 are respectively connected to courtesy switches 50h, 50k, 50m, and 50o disposed in the doors via the sub-wires 40f, 40i, 40k, and 40m (see FIG. 1). Accordingly, as compared with the case where the courtesy switches are provided on the vehicle body 2 side, the overall routing of the sub-wires 40 in this region becomes easy, and the overall length of the sub-wires 40 in this region can be shortened.

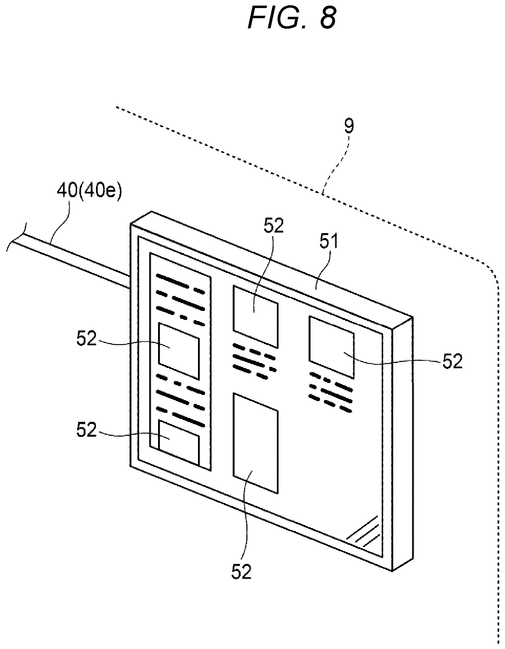

The door switch 50g and the like disposed in the door region may be replaced with a touch panel 51 that displays operation units 52 for operating the door switch 50g (see FIG. 8). In the example shown in FIG. 8, the touch panel 51 is provided on the door interior panel 9, and the touch panel 51 is connected to the region control device 20 (20c) disposed in the region where the door switch 50g is disposed via the sub-wire 40 (40e). Accordingly, for example, it is possible to respond to the addition of the electric component 50 or specification changes through software. Further, the display of the touch panel 51 can be optimized in accordance with a dominant hand of a user and the vehicle specifications.

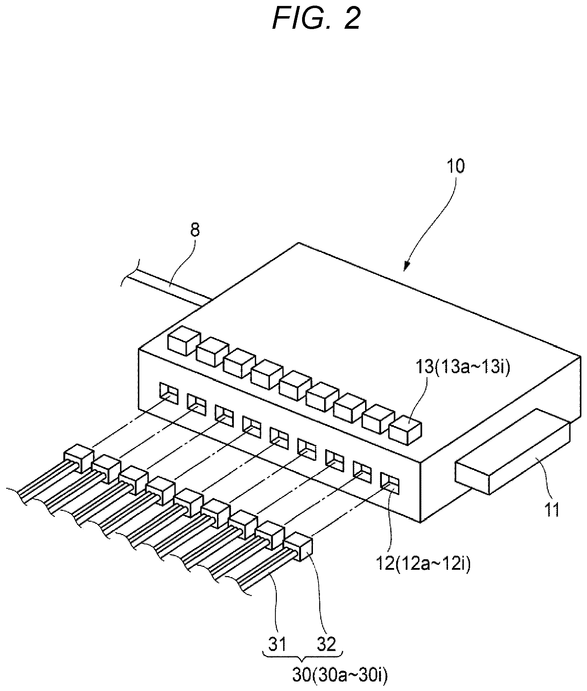

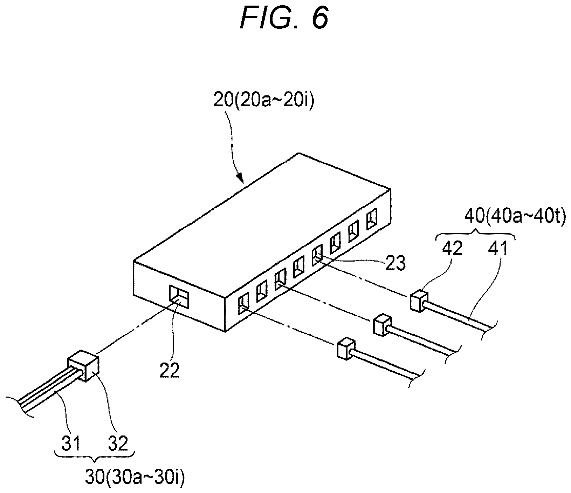

Next, the structure of the main wires 30 will be described. As shown in FIGS. 2 and 6, each of the plurality of main wires 30 (30a to 30i) includes an electric wire portion 31 and connector portions 32 attached to both ends of the electric wire portion 31. For each main wire 30, the connector portion 32 on one end side of the electric wire portion 31 is connected to a corresponding connector accommodation hole 12 (see FIG. 2) of the power supply signal hub 10, and the connector portion 32 on the other end side of the electric wire portion 31 is connected to a connector accommodation hole 22 (see FIG. 6) of the corresponding region control device 20.

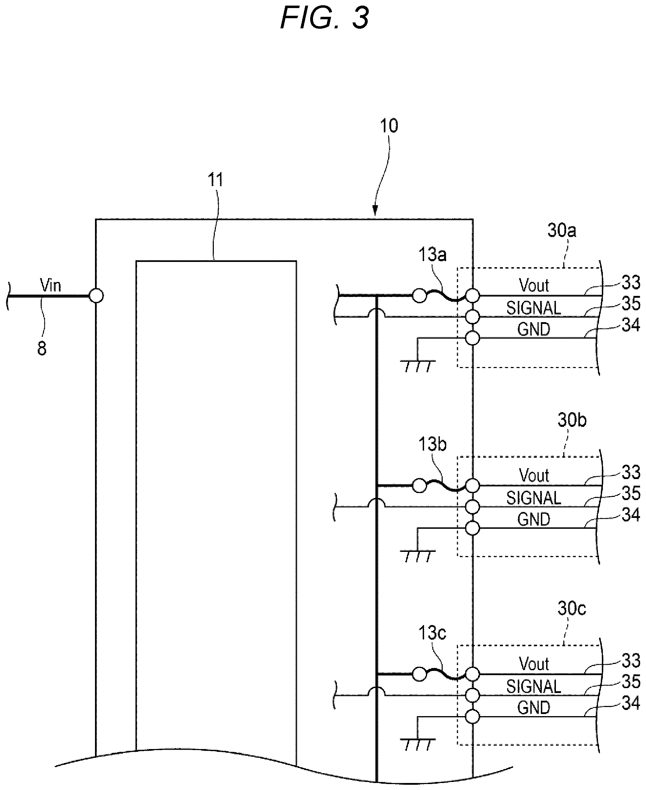

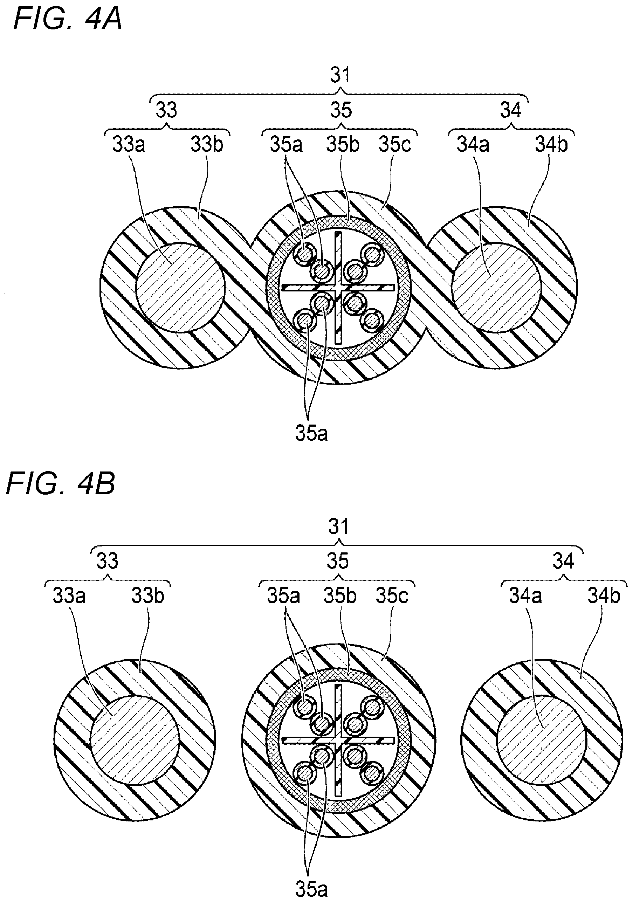

As shown in FIGS. 3, 4A, and 4B, the electric wire portion 31 includes a power supply line 33 for transmitting electric power, a ground line 34 for a reference potential (for example, for body ground), and a signal line 35 for transmitting a communication signal. As shown in FIGS. 4A and 4B, the power supply line 33 includes a conductor line 33a having a circular cross section for electric power transmission and a resin insulator 33b covering the conductor line 33a. The ground line 34 includes a conductor line 34a having a circular cross section for ground and a resin insulator 34b covering the conductor line 34a. The signal line 35 includes four sets of twisted-pair wires 35a for signal transmission, a braided conductor 35b that collectively covers the four sets of twisted-pair wires 35a, and a resin insulator 35c that covers the braided conductor 35b. The braided conductor 35b has a function of preventing a signal transmitted by the four sets of twisted-pair wires 35a from being influenced by noise caused by an external magnetic field or the like. The insulator 33b of the power supply line 33 and the insulator 35c of the signal line 35, and the insulator 35c of the signal line 35 and the insulator 34b of the ground line 34 are integrally connected over the entire region in an extending direction of the main wire 30 such that the power supply line 33, the signal line 35, and the ground line 34 are arranged in a line in a width direction (see FIG. 4A). As shown in FIG. 4B, the power supply line 33, the ground line 34, and the signal line 35 may be separate and independent from one another. Further, when the influence of noise is small, such as when the communication signal is transmitted and received as a digital signal via the signal line 35, the braided conductor 35b may not be provided in the signal line 35. The electric wire portion 31 of each of the plurality of main wires 30 (30a to 30i) has no branch point.

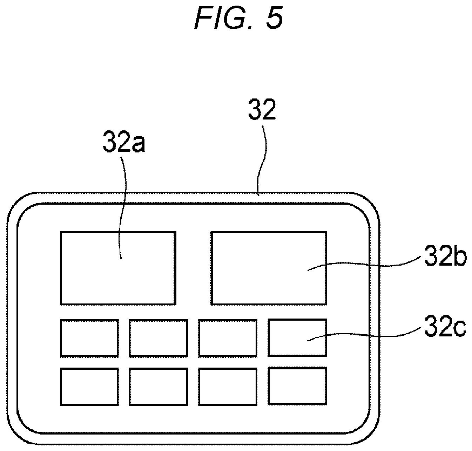

As shown in FIG. 5, the connector portion 32 is provided with a terminal portion 32a electrically connected to the conductor line 33a of the power supply line 33, a terminal portion 32b electrically connected to the conductor line 34a of the ground line 34, and eight terminal portions 32c electrically connected to the four sets of twisted-pair wires 35a (that is, eight conductor lines) of the signal line 35. When the connector portion 32 is disposed in a portion where there is a possibility of being wetted by water in the vehicle body 2, a waterproof connector is used as the connector portion 32, and when the connector portion 32 is disposed in a portion where there is no possibility of being wetted by water in the vehicle body 2, a non-waterproof connector is used as the connector portion 32.

As described above, the electric wire portions 31 of the plurality of main wires 30 have a common structure in that each electric wire portion 31 includes the power supply line 33, the ground line 34, and the signal line 35 and has a structure without branching. Thus, the main wire 30 can be easily manufactured automatically by a machine, assembly work by manual work of a worker can be reduced or eliminated, and excessively thick or long electric wires that are intended to branch are eliminated. Further, since the electric wire portions 31 of the plurality of main wires 30 have a common structure, the connector portions 32 of the plurality of main wires 30 can also be standardized. Accordingly, it is easy to automate the work of attaching the connector portion 32 to the electric wire portion 31 by the machine, the assembly work by the manual work of the worker can be reduced or eliminated, and the main wire 30 can be manufactured in a short delivery time and at low costs.

Next, the structure of the sub-wire 40 will be described. As shown in FIG. 6, each of the plurality of sub-wires 40 (40a to 40t) includes an electric wire portion 41 and connector portions 42 attached to both ends of the electric wire portion 41. For each sub-wire 40, the connector portion 42 on one end side of the electric wire portion 41 is connected to a corresponding connector accommodation hole 23 (see FIG. 6) of the corresponding region control device 20, and the connector portion 42 on the other end side of the electric wire portion 41 is connected to a connector accommodation hole (not shown) of the corresponding electric component 50.

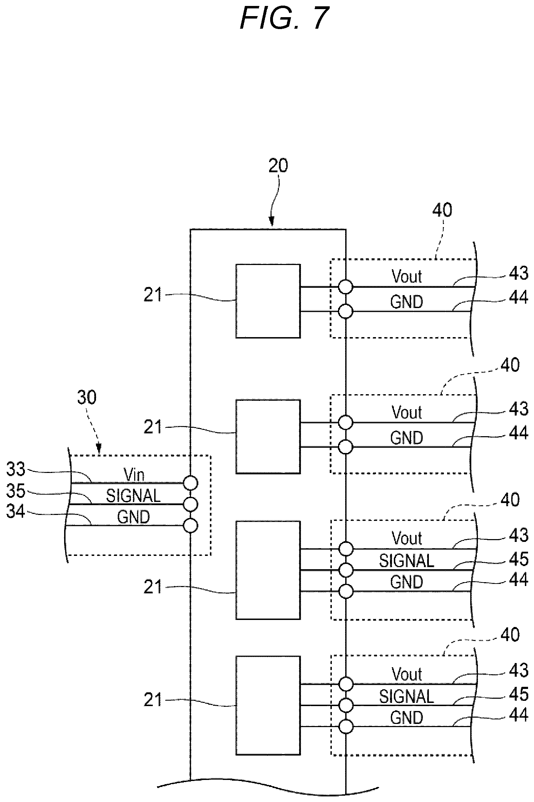

The structure of the electric wire portion 41 and the connector portion 42 of the sub-wire 40 may be the same as the structure of the electric wire portion 31 and the connector portion 32 of the main wire 30, or the number of the signal lines 35 and the presence or absence of the signal lines 35 may be changed in response to the electric component 50 to which the sub-wire 40 is connected. Similar to the main wire 30, the electric wire portion 41 of a part of the sub-wires 40 includes a power supply line 43, a ground line 44, and a signal line 45 (see FIG. 7). A sub-wire 40 having no signal line 45 may be present. Of the plurality of sub-wires 40 (40a to 40t), most of the sub-wires 40 excluding the sub-wires 40a and 40c connect the corresponding region control device 20 to the electric component 50 in a one-to-one manner without branching, and each of the sub-wires 40a and 40c has a branch point. Further, of the plurality of sub-wires 40 (40a to 40t), in the sub-wire 40 to which the electric component 50 that does not require a communication signal is connected, the signal line 45 may be omitted in the electric wire portion 41, and a terminal portion electrically connected to the signal line 45 may be omitted in the connector portion 42 (see FIG. 7).

In this way, most of the plurality of sub-wires 40 connect the corresponding region control device 20 to the electric component 50 in a one-to-one manner without branching. Accordingly, since the sub-wire 40 has no branch, it is easy to automatically manufacture the sub-wire 40 by the machine, the assembly work by the manual work of the worker can be reduced or eliminated, and excessively thick or long electric wires that are intended to branch are eliminated. Further, by increasing the number of sub-wires 40 without branching as much as possible, the common sub-wires 40 can be standardized similar to the main wires 30. Further, when the electric component 50 is added or changed in response to specification changes of the vehicle or the like, the circuit structure can be changed in a short delivery time and at low costs.

Next, the structure of the power supply signal hub 10 will be described. As shown in FIGS. 2 and 3, the power supply signal hub 10 is provided with a microcomputer 11. The microcomputer 11 has a function of controlling supply of electric power to each of the plurality of region control devices 20 and transmission of the communication signal to each of the plurality of region control devices 20. The microcomputer 11 is detachably provided on the power supply signal hub 10 via one side face of a housing of the power supply signal hub 10 (see FIG. 2). Accordingly, the replacement of the microcomputer 11 and a version upgrade of the control software can be achieved by specification changes of the vehicle or the like. The microcomputer 11 transmits and receives the communication signal as the digital signal through the signal lines 35 (see FIG. 3) between the electric wire signal hub 10 and the region control device 20. Accordingly, the structure of the circuit structure 1 can be simplified by performing multiplex communication through the signal lines 35. Since the multiplex communication is less susceptible to the influence of external noise compared with analog communication, the main wire 30 may not be provided with a shield member or the like as protection against the external noise. If necessary, the shield member may be provided on the sub-wire 40 that connects the region control device 20 to the electric component 50. Since the main wire 30 may not be distinguished depending on the presence or absence of the shield member, the main wire 30 is more easily commonalized.

On the other side face of the housing of the power supply signal hub 10, a plurality of connector accommodation holes 12 (12a to 12i) are provided to correspond to the plurality of main wires 30 (30a to 30i) in a horizontal direction (see FIG. 2). The connector portion 32 (see FIG. 2) on one end side of the corresponding main wire 30 is connected to each of the plurality of connector accommodation holes 12. On an upper face of the housing of the power supply signal hub 10, a plurality of circuit breakers (for example, fuses or fusible links) 13 (13a to 13i) are provided to correspond to the plurality of main wires 30 (30a to 30i) in the horizontal direction (see FIG. 2). As shown in FIG. 3, each of the plurality of circuit breakers 13 is provided for each of the main wires 30 so as to cut off energization to the power supply line 33 when the energization electric power to the power supply line 33 of each of the plurality of main wires 30 exceeds a rated electric power. Accordingly, for example, even when the energization to a specific region of the vehicle is cut off, the energization to another region is maintained, and a function of the electric component 50 in the other region is maintained. Further, since there is no electric wire across the regions, the length of the power supply line 33 from the circuit breaker 13 to the electric component 50 is shortened as a whole, and a reduction in a circuit resistance of the power supply line 33 enables the circuit breaker 13 to operate quickly (for example, by blowing a fuse) in the event of a short circuit. Further, as compared with the case where the circuit breaker 13 is provided for each system of the vehicle, the number of the circuit breakers 13 can be reduced.

Next, the structure of the region control device 20 will be described. As shown in FIG. 7, the region control device 20 includes, for each of the electric components 50 (that is, each of the sub-wires 50 to be connected), a microcomputer (a chip dedicated to the electric component 50) 21 for driving each of the electric components 50 to be connected. Accordingly, since the microcomputer 21 only needs to have performance capable of driving a specific electric component 50, excessively high performance is not necessary. Thus, production costs of the microcomputer 21 can be reduced. Further, for example, when the microcomputer 21 is switched between a mode in which the microcomputer 21 operates under an instruction from the microcomputer 11 (see FIG. 3) and a mode in which the microcomputer 21 operates independently of the microcomputer 11 according to a driving state of the vehicle, a communication amount of the communication signal through the main wire 30 can be reduced.

As shown in FIG. 6, one connector accommodation hole 22 is provided on one side face of the housing of the region control device 20. The connector portion 32 (see FIG. 6) on the other end side of the corresponding main wire 30 is connected to the connector accommodation hole 22. On the other side face of the housing of the region control device 20, a plurality of connector accommodation holes 23 are provided side by side in the horizontal direction. The connector portion 42 on one end side of the corresponding sub-wire 40 is connected to each of the plurality of connector accommodation holes 23. The number of the connector accommodation holes 23 may be larger than the number of the sub-wires 40 connected to the region control device 20. Accordingly, it is easy to add or change the electric component 50 in response to the specification changes of the vehicle or the like.

### <Operations and Effects>

As described above, according to the circuit structure 1 of the present embodiment, the power supply signal hub 10 connected to the power supply (for example, the battery or the like) 7 and the plurality of region control devices 20 connected to the power supply signal hub 10 are connected by the plurality of main wires 30 in a one-to-one manner without branching. Further, the plurality of main wires 30 have a common structure in that each main wire 30 includes the power supply line 33 for transmitting the electric power, the ground line 34 for the reference potential, and the signal line 35 for transmitting the communication signal. Accordingly, since the main wire 30 has no branch and has the common structure, it is easy to automatically manufacture the main wire by the machine, the assembly work by the manual work of the worker can be reduced or eliminated, and excessively thick or long electric wires that are intended to branch are eliminated. Further, the region control device 20 and the electric component 50 to be controlled are connected by the sub-wire 40. Accordingly, when the electric component 50 is added or changed in response to the specification changes of the vehicle or the like, the circuit structure 1 can be changed in a short delivery time and at low costs. Therefore, according to the present embodiment, the circuit structure 1 can be simplified. Further, the present disclosure contributes to reducing the weight and costs of the circuit structure 1 and reducing the amount of carbon dioxide discharged during a manufacturing process.

Further, the region control device 20 is not directly connected without via the power supply signal hub 10, and each of the plurality of region control devices 20 is disposed in each of a plurality of regions (for example, a front right region, a front left region, each door region, and a rear region) of the vehicle, and is connected to the electric component 50 disposed in each region. Accordingly, the product numbers of sub-wires 40 can be reduced by deleting the electric wire across the regions. Further, for example, if the circuit structure 1 is disposed such that the power supply signal hub 10 is disposed at the center of the vehicle, the main wire 30 extends from the power supply signal hub 10 toward the region control device 20 in each region of the vehicle, and the sub-wire 40 extends from the region control device 20 toward each electric component 50 in each region, since the structure of the main wire 30 is simplified and there is no electric wire across the regions, and the space required for disposing the circuit structure 1 can be reduced, the degree of freedom in designing the vehicle interior space can be improved. Further, the number of members (so-called protectors) for protecting the main wire 30 and the sub-wire 40 can also be reduced.

Further, at least one of the plurality of sub-wires 40 connects the region control device 20 to the electric component 50 in a one-to-one manner without branching. Accordingly, since the sub-wire 40 has no branch, it is easy to automatically manufacture the sub-wire 40 by the machine, the assembly work by the manual work of the worker can be reduced or eliminated, and the excessively thick or long electric wires that are intended to branch are eliminated. Further, by increasing the number of sub-wires 40 without branching as much as possible, the common sub-wires 40 can be standardized similar to the main wires 30. Further, when the electric component 50 is added or changed in response to the specification changes of the vehicle or the like, the circuit structure 1 can be changed in a short delivery time and at low costs.

Further, each of the plurality of circuit breakers (for example, a fuse or a fusible link) 13 provided in the power supply signal hub 10 is provided for each of the main wires 30 so as to cut off energization to the power supply line 33 of each of the plurality of main wires 30. Accordingly, for example, even when the energization to the specific region of the vehicle is cut off, the energization to the other region is maintained, and the function of the electric component 50 in the other region is maintained. Further, since there is no electric wire across the regions, the length of the power supply line 33 from the circuit breaker 13 to the electric component 50 is shortened as a whole, and the reduction in the circuit resistance of the power supply line 33 enables the circuit breaker 13 to operate quickly (for example, by blowing a fuse) in the event of the short circuit. Further, as compared with the case where the circuit breaker 13 is provided for each system of the vehicle, the number of the circuit breakers 13 can be reduced.

Further, the microcomputer 11 of the power supply signal hub 10 digitally transmits and receives the communication signal through the signal lines 35 between the power supply signal hub 10 and the region control device 20. Accordingly, the structure of the circuit structure 1 can be simplified by performing the multiplex communication through the signal lines 35. Since the multiplex communication is less susceptible to the influence of the external noise than the analog communication, the main wire 30 may not be provided with the shield member or the like as the protection against the external noise. If necessary, the shield member may be provided on the sub-wire 40 that connects the region control device 20 to the electric component 50. Since the main wire 30 may not to be distinguished depending on the presence or absence of the shield member, the main wire 30 is more easily commonalized.

Further, the power supply signal hub 10 is configured to be detachable from the microcomputer 11. Accordingly, the replacement of the microcomputer 11 and the version upgrade of the control software can be achieved by the specification changes of the vehicle or the like.

Further, the region control device 20 includes, for each of the electric components 50, the microcomputers 21 for driving each of the electric components 50. Accordingly, since the microcomputer 21 only needs to have the performance capable of driving the specific electric component 50, the excessively high performance is not necessary. Thus, the production costs of the region control device 20 can be reduced. Further, for example, when the microcomputer 21 is switched between the mode in which the microcomputer 21 operates under the instruction from the microcomputer 11 and the mode in which the microcomputer 21 operates independently of the microcomputer 11 according to the driving state of the vehicle, the communication amount of the communication signal through the main wire 30 can be reduced.

Further, the main wire 30 includes the electric wire portion 31 and the connector portions 32 of a common structure attached to the electric wire portion 31. Since the electric wire portion 31 has the above-described common structure, the connector portion 32 can be commonalized. Accordingly, it is easy to automate the work of attaching the connector portion 32 to the electric wire portion 31 by the machine, the assembly work by the manual work of the worker can be reduced or eliminated, and the main wire 30 can be manufactured in a short delivery time and at low costs.

Further, the region control device 20 disposed in the region including the door of the vehicle is configured to be connected to the courtesy switches 50h, 50k, 50m, and 50o disposed in the door via the sub-wires 40. Accordingly, as compared with the case where the courtesy switches 50 are provided in the vehicle body 2, the overall routing of the sub-wires 40 in this region becomes easy, and the overall length of the sub-wires 40 in this region can be shortened.

Further, the region control device 20 is connected to the input and output device (for example, the touch panel) 51 for displaying the operation units 52 for operating the plurality of electric components 50 disposed in the region where the region control device 20 is disposed, via the sub-wires 40. Accordingly, for example, it is possible to respond to the addition of the electric component 50 or the specification changes through software. Further, the display of the input and output device 51 can be optimized in accordance with the dominant hand of the user and the vehicle specifications.

### <Other Embodiments>

The present disclosure is not limited to the embodiment described above. The scope is defined by the claims.

According to the vehicle circuit structure of claim 1, the first control unit (for example, a power supply signal hub) connected to the power supply (for example, a battery or the like) and the plurality of second control units (for example, a region control device) to be connected to the first control unit are connected to each other in a one-to-one manner via the plurality of first wires without branching. Further, the plurality of first wires have a common structure in that each of the first wires includes the power supply line transmitting the electric power, the ground line indicating the reference potential, and the signal line transmitting the communication signal. In this way, since the first wire has no branch and has the common structure, it is easy to automate the production of the first wire by a machine, assembly work by manual work of a worker can be reduced or eliminated, and excessively thick or long electric wires that are intended to branch are eliminated from the first wire. Further, the second control unit and the electric component to be controlled are connected by the second wire. Accordingly, the circuit structure of the present configuration can simplify the overall structure while maintaining the required function as a vehicle circuit structure. As a result, the circuit structure can be produced in a short delivery time and at low costs as compared with a circuit structure in the related art. When the electric component is added or changed in response to specification changes of a vehicle, the circuit structure can be easily changed or reconfigured. In addition, the circuit structure of the present configuration can contribute to reduction in weight of the vehicle and reduction in the amount of carbon dioxide emissions in a production process of the circuit structure.

According to the vehicle circuit structure according to the embodiment of claim 2, there is no electric wire (in other words, an electric wire that crosses the regions) in which the second control units are connected to each other without via the first control unit, and each of the plurality of second control units is disposed in each of the plurality of regions of the vehicle (for example, a front right region, a front left region, each door region, a rear region, and the like), and is connected to the electric component disposed in each of the regions. Accordingly, the product numbers of the second wires can be reduced since there is no electric wire across the regions. Further, for example, if the circuit structure is disposed (routed) such that the first control unit is disposed at a center of the vehicle, the first wire extends from the first control unit toward the second control device in each region of the vehicle, and the second wire extends from the second control unit toward each electric component in each region, since the structure of the first wire is simplified and there is no electric wire across the regions, and a space required for disposing (routing) the circuit structure can be reduced, the degree of freedom in designing a vehicle interior space can be improved. Further, the number of members (so-called protectors) for protecting the first wire and the second wire can be reduced.

According to the vehicle circuit structure according to the embodiment of claim 3, at least one of the plurality of second wires connects the second control unit to the electric component in a one-to-one manner without branching. Accordingly, since the second wire has no branch, it is easy to automate the production of the second wire by a machine, assembly work by manual work of the worker can be reduced or eliminated, and excessively thick or long electric wires that are intended to branch are eliminated. Further, when most of the plurality of second wires (preferably all) of the second wires are eliminated, the second wires can be commonalized similar to the first wires. Further, when the electric component is added or changed in response to the specification changes of the vehicle or the like, the circuit structure can be changed in a short delivery time and at low costs.

According to the vehicle circuit structure according to the embodiment of claim 4, each of the plurality of circuit breakers (for example, a fuse or a fusible link) provided in the first control unit is provided for each of the first wires so as to cut off energization to the power supply line of each of the plurality of first wires. Accordingly, for example, even when the energization to the specific region of the vehicle is cut off, the energization to the other region is maintained, and the function of the electric component in the other region is maintained. Further, since there is no electric wire across the regions, the length of the power supply line from the circuit breaker to the electric component is shortened as a whole, and a reduction in a circuit resistance of the power supply line enables the circuit breaker to operate quickly (for example, by blowing a fuse) in the event of a short circuit. In addition, as compared with the case where the circuit breaker is provided for each system of the vehicle, the number of circuit breakers can be reduced.

According to the vehicle circuit structure according to the embodiment of claim 5, the first processing device transmits and receives the communication signal as the digital signal through the signal line between the first control unit and the second control unit. Accordingly, the number of signal lines can be reduced by performing multiplex communication through the signal lines, and the structure of the circuit structure can be simplified. Further, since the multiplex communication is less likely to be influenced by external noise than analog communication, the first wire may not be provided with a shield member or the like as protection against the external noise. Since the first wire may not to be distinguished depending on the presence or absence of the shield member, the first wire is more easily commonalized. If necessary, the shield member may be provided on the second wire that connects the second control unit to the electric component.

According to the vehicle circuit structure according to the embodiment of claim 6, the first control unit is configured to be detachable from the first processing device. Accordingly, it is possible to replace the first processing device with a high performance one and upgrade the control software in response to the specification changes of the vehicle or the like or the like, and it will also be easy to apply the circuit structure to a so-called soft defined vehicle (SDV).

According to the vehicle circuit structure according to the embodiment of claim 7, the second control unit includes, for each of the electric components, the second processing device for driving each of the electric components. Accordingly, since the second processing device only needs to have performance capable of driving a specific electric component, excessively high performance is not necessary. Therefore, since the inexpensive second processing device can be used, production costs of the second control unit can be reduced. Further, for example, when the second processing device is switched between a mode in which the second processing device operates under an instruction from the first processing device and a mode in which the second processing device operates independently of the first processing device according to a driving state of the vehicle, a communication amount of the communication signal through the first wire can be reduced.

According to the invention, each of the plurality of first wires (30) includes an electric wire portion (31) that includes the power supply line (33), the ground line (34), and the signal line (35), and a connector portion (32) of a common structure that is attached to the electric wire portion (31).

Therein the first wire includes the electric wire portion and the connector portion of the common structure that is attached to the electric wire portion. Since the electric wire portion has the above-described common structure (that is, the structure including the power supply line, the ground line, and the signal line), the connector portion can be commonalized. Accordingly, it is easy to automate the work of attaching the connector portion to the electric wire portion by a machine, the assembly work by the manual work of the worker can be reduced or eliminated, and the first wire can be manufactured in the short delivery time and at the low costs.

According to the vehicle circuit structure according to the embodiment of claim 8, the second control unit disposed in the region including the door of the vehicle is configured to be connected to the courtesy switch disposed in the door via the second wire. As compared with the case where the courtesy switch is provided in a vehicle body, the overall routing of the second wire in this region becomes easy, and the overall length of the second wire in this region can be shortened.

According to the vehicle circuit structure according to the embodiment of claim 9, the second control unit is connected, via the second wire, to the input and output device (for example, a touch panel) that displays the operation units for operating the plurality of electric components disposed in the region where the second control unit is disposed. Accordingly, for example, it is possible to respond to the addition of the electric component or changes in the specifications by changing a screen display of the operation units. In other words, it is possible to respond to the addition of the electric component or the specification changes. Further, the display of the input and output device can be optimized in accordance with a dominant hand of a user and vehicle specifications.

## Claims

1. A vehicle circuit structure (1) for supplying electric power to a plurality of electric components mounted on a vehicle and transmitting a communication signal to the plurality of electric components (50), the vehicle circuit structure (1) comprising:
a first control unit (10) that is connected to a power supply (7);
a plurality of second control units (20) that is connected to the first control unit (10);
a plurality of first wires (30) that connect the first control unit (10) to the plurality of second control units (20) in a one-to-one manner without branching; and
a plurality of second wires (40) that connect each of the plurality of second control units (20) to the electric component (50) to be controlled, wherein
the first control unit (10) includes a first processing device (11) configured to control supply of electric power to each of the plurality of second control units (20) and transmission of a communication signal to each of the plurality of second control units (20), and
each of the plurality of first wires (30) includes a power supply line (33) to transmit electric power, a ground line (34) to indicate a reference potential, and a signal line (35) to transmit a communication signal,
wherein each of the plurality of first wires (30) includes an electric wire portion (31) that includes the power supply line (33), the ground line (34), and the signal line (35), and connector portions (32) of a common structure that are attached to both ends of the electric wire portion (31).

2. The vehicle circuit structure (1) according to claim 1, wherein
the plurality of second wires (40) do not constitute a direct connection circuit in which one of the second control units (20) and another of the second control units (20) are connected to each other without via the first control unit (10), and
each of the plurality of second control units (20) is disposed in each of a plurality of regions of the vehicle and connected to the electric component (50) disposed in each of the regions.

3. The vehicle circuit structure (1) according to claim 1, wherein
at least one of the plurality of second wires (40) is connected to one of the second control units (20) and one of the electric components (50) in a one-to-one manner without branching.

4. The vehicle circuit structure (1) according to claim 2, wherein
the first control unit (10) includes a plurality of circuit breakers configured to cut off energization to the power supply line (33), and
each of the plurality of circuit breakers is provided for each of the first wires so as to cut off energization to the power supply line (33) of each of the plurality of first wires (30).

5. The vehicle circuit structure (1) according to claim 1, wherein
the first processing device (11) configured to transmit and receive a communication signal as a digital signal through the signal line (35) between the first control unit (10) and each of the plurality of second control units (20).

6. The vehicle circuit structure (1) according to claim 1, wherein
the first control unit (10) is detachable from the first processing device (11).

7. The vehicle circuit structure (1) according to claim 1, wherein
the second control unit (20) includes, for each of the electric components (50), a second processing device (21) configured to drive each of the plurality of electric components (50).

8. The vehicle circuit structure (1) according to claim 2, wherein
the second control unit (20) disposed in the region including a door of the vehicle is connected, via the second wire (40), to a courtesy switch, which is the electric component (50) disposed in the door and detecting opening and closing of the door.

9. The vehicle circuit structure (1) according to claim 2, wherein
the second control unit (20) is connected, via the second wire (40), to an input and output device (51) configured to display a plurality of operation units (52) for operating the plurality of electric components (50) disposed in the region where the second control unit (20) is disposed.

## Patentansprüche

1. Fahrzeugschaltkreisstruktur (1) zum Zuführen von elektrischer Leistung an eine Vielzahl von elektrischen Komponenten, die an einem Fahrzeug montiert ist, und Übertragen eines Kommunikationssignals an die Vielzahl von elektrischen Komponenten (50), die Fahrzeugschaltkreisstruktur (1) umfassend:
eine erste Steuereinheit (10), die mit einer Leistungszufuhr (7) verbunden ist;
eine Vielzahl von zweiten Steuereinheiten (20), die mit der ersten Steuereinheit (10) verbunden ist;
eine Vielzahl von ersten Drähten (30), die die erste Steuereinheit (10) in einer eins-zu-eins-Weise ohne Verzweigung mit der Vielzahl von zweiten Steuereinheiten (20) verbindet; und
eine Vielzahl von zweiten Drähten (40), die jede der Vielzahl von zweiten Steuereinheiten (20) mit der zu steuernden elektrischen Komponente (50) verbindet, wobei
die erste Steuereinheit (10) eine erste Verarbeitungsvorrichtung (11) einschließt, die dazu konfiguriert ist, eine Zufuhr von elektrischer Leistung an jede der Vielzahl von zweiten Steuereinheiten (20) und eine Übertragung eines Kommunikationssignals an jede der Vielzahl von zweiten Steuereinheiten (20) zu steuern, und
wobei jeder der Vielzahl von ersten Drähten (30) eine Leistungszufuhrleitung (33), um elektrische Leistung zu übertragen, eine Erdungsleitung (34), um ein Referenzpotential anzugeben, und eine Signalleitung (35), um ein Kommunikationssignal zu übertragen, einschließt,
wobei jeder der Vielzahl von ersten Drähten (30) einen elektrischen Drahtabschnitt (31), der die Leistungszufuhrleitung (33), die Erdungsleitung (34) und die Signalleitung (35) einschließt, und Verbinderabschnitte (32) einer einheitlichen Struktur, die an beiden Enden des elektrischen Drahtabschnitts (31) angebracht sind, einschließt.

2. Fahrzeugschaltkreisstruktur (1) nach Anspruch 1, wobei
die Vielzahl von zweiten Drähten (40) keinen direkten Verbindungsschaltkreis ausbildet, in dem eine der zweiten Steuereinheiten (20) und eine andere der zweiten Steuereinheiten (20) ohne Umweg über die erste Steuereinheit (10) miteinander verbunden sind, und
jede der Vielzahl von zweiten Steuereinheiten (20) in jeder von einer Vielzahl von Regionen des Fahrzeugs angeordnet ist und mit der in jeder der Regionen angeordneten elektrischen Komponente (50) verbunden ist.

3. Fahrzeugschaltkreisstruktur (1) nach Anspruch 1, wobei
mindestens einer der Vielzahl von zweiten Drähten (40) in einer eins-zu-eins-Weise ohne Verzweigung mit einer der zweiten Steuereinheiten (20) und einer der elektrischen Komponenten (50) verbunden ist.

4. Fahrzeugschaltkreisstruktur (1) nach Anspruch 2, wobei
die erste Steuereinheit (10) eine Vielzahl von Schaltkreisunterbrechern einschließt, die dazu konfiguriert ist, eine Bestromung zu der Leistungszufuhrleitung (33) abzuschneiden, und
jede der Vielzahl von Schaltkreisunterbrechern für jede der ersten Drähte bereitgestellt ist, um die Bestromung zu der Leistungszufuhrleitung (33) von jedem der Vielzahl von ersten Drähten (30) abzuschneiden.

5. Fahrzeugschaltkreisstruktur (1) nach Anspruch 1, wobei
die erste Verarbeitungsvorrichtung (11) dazu konfiguriert ist, ein Kommunikationssignal als ein digitales Signal durch die Signalleitung (35) zwischen der ersten Steuereinheit (10) und jeder der Vielzahl von zweiten Steuereinheiten (20) zu übertragen und zu empfangen.

6. Fahrzeugschaltkreisstruktur (1) nach Anspruch 1, wobei
die erste Steuereinheit (10) von der ersten Verarbeitungsvorrichtung (11) lösbar ist.

7. Fahrzeugschaltkreisstruktur (1) nach Anspruch 1, wobei
die zweite Steuereinheit (20) für jede der elektrischen Komponenten (50) eine zweite Verarbeitungsvorrichtung (21) einschließt, die dazu konfiguriert ist, jede der Vielzahl von elektrischen Komponenten (50) anzusteuern.

8. Fahrzeugschaltkreisstruktur (1) nach Anspruch 2, wobei
die zweite Steuereinheit (20), die in der Region angeordnet ist, die eine Tür des Fahrzeugs einschließt, über den zweiten Draht (40) mit einem Türschalter verbunden ist, der die elektrische Komponente (50) ist, die in der Tür angeordnet ist und Öffnen und Schließen der Tür detektiert.

9. Fahrzeugschaltkreisstruktur (1) nach Anspruch 2, wobei
die zweite Steuereinheit (20) über den zweiten Draht (40) mit einer Eingabe- und Ausgabevorrichtung (51) verbunden ist, die dazu konfiguriert ist, eine Vielzahl von Betriebseinheiten (52) zum Betreiben der Vielzahl von elektrischen Komponenten (50) anzuzeigen, die in der Region angeordnet sind, in der die zweite Steuereinheit (20) angeordnet ist.

## Revendications

1. Structure de circuit de véhicule (1) pour apporter de l'énergie électrique à une pluralité de composants électriques montés sur un véhicule et transmettre un signal de communication à la pluralité de composants électriques (50), la structure de circuit de véhicule (1) comprenant :
une première unité de commande (10) qui est connectée à une alimentation électrique (7) ;
une pluralité de deuxièmes unités de commande (20) qui sont connectées à la première unité de commande (10) ;
une pluralité de premiers fils (30) qui connectent la première unité de commande (10) à la pluralité de deuxièmes unités de commande (20) d'une manière biunivoque sans branchement ; et
une pluralité de deuxièmes fils (40) qui connectent chacune de la pluralité de deuxièmes unités de commande (20) au composant électrique (50) devant être commandé, dans laquelle
la première unité de commande (10) inclut un premier dispositif de traitement (11) configuré pour commander l'apport d'énergie électrique à chacune de la pluralité de deuxièmes unités de commande (20) et la transmission d'un signal de communication à chacune de la pluralité de deuxièmes unités de commande (20), et
chacun de la pluralité de premiers fils (30) inclut une ligne d'alimentation électrique (33) pour transmettre de l'énergie électrique, une ligne de terre (34) pour indiquer un potentiel de référence, et une ligne de signal (35) pour transmettre un signal de communication,
dans laquelle chacun de la pluralité de premiers fils (30) inclut une partie fil électrique (31) qui inclut la ligne d'alimentation électrique (33), la ligne de terre (34) et la ligne de signal (35), et des parties connecteur (32) d'une structure commune qui sont fixées aux deux extrémités de la partie fil électrique (31).

2. Structure de circuit de véhicule (1) selon la revendication 1, dans laquelle
la pluralité de deuxièmes fils (40) ne constituent pas un circuit de connexion directe dans lequel l'une des deuxièmes unités de commande (20) et une autre des deuxièmes unités de commande (20) sont connectées l'une à l'autre sans passer par la première unité de commande (10), et
chacune de la pluralité de deuxièmes unités de commande (20) est disposée dans chacune d'une pluralité de régions du véhicule et connectée au composant électrique (50) disposé dans chacune des régions.

3. Structure de circuit de véhicule (1) selon la revendication 1, dans laquelle
au moins un de la pluralité de deuxièmes fils (40) est connecté à l'une des deuxièmes unités de commande (20) et à l'un des composants électriques (50) d'une manière biunivoque sans branchement.

4. Structure de circuit de véhicule (1) selon la revendication 2, dans laquelle
la première unité de commande (10) inclut une pluralité de disjoncteurs configurés pour couper la mise sous tension de la ligne d'alimentation électrique (33), et
chacun de la pluralité de disjoncteurs est prévu pour chacun des premiers fils de manière à couper la mise sous tension de la ligne d'alimentation électrique (33) de chacun de la pluralité de premiers fils (30).

5. Structure de circuit de véhicule (1) selon la revendication 1, dans laquelle
le premier dispositif de traitement (11) est configuré pour transmettre et recevoir un signal de communication en tant que signal numérique par l'intermédiaire de la ligne de signal (35) entre la première unité de commande (10) et chacune de la pluralité de deuxièmes unités de commande (20).

6. Structure de circuit de véhicule (1) selon la revendication 1, dans laquelle
la première unité de commande (10) peut être détachée du premier dispositif de traitement (11).

7. Structure de circuit de véhicule (1) selon la revendication 1, dans laquelle
la deuxième unité de commande (20) inclut, pour chacun des composants électriques (50), un deuxième dispositif de traitement (21) configuré pour piloter chacun de la pluralité de composants électriques (50).

8. Structure de circuit de véhicule (1) selon la revendication 2, dans laquelle
la deuxième unité de commande (20) disposée dans la région incluant une portière du véhicule est connectée, via le deuxième fil (40), à un contacteur de courtoisie, qui est le composant électrique (50) disposé dans la portière et détectant l'ouverture et la fermeture de la portière.

9. Structure de circuit de véhicule (1) selon la revendication 2, dans laquelle
la deuxième unité de commande (20) est connectée, via le deuxième fil (40), à un dispositif d'entrée/sortie (51) configuré pour afficher une pluralité d'unités d'actionnement (52) pour actionner la pluralité de composants électriques (50) disposés dans la région où la deuxième unité de commande (20) est disposée.
